# EUROPÄISCHE PATENTANMELDUNG

(11) **EP 2 878 936 A1**
(43) Veröffentlichungstag der Anmeldung: **03.06.2015**
(21) Anmeldenummer: 14192759.0
(22) Anmeldetag: 12.11.2014
(51) Int. Cl.: G01J 3/02, G01J 3/12, G01J 3/18, G01J 3/44, G01N 21/64, G02B 21/00

(54) **Vorrichtung zur Ermittlung von Fluoreszenzeigenschaften von Proben**

(30) Priorität: 28.11.2013 DE 102013224463
(71) Anmelder: Berthold Technologies GmbH & Co. KG, 75323 Bad Wildbad (DE)
(72) Erfinder: Schleifenbaum, Dr. Frank, 75217 Birkenfeld (DE)
(74) Vertreter: Patentanwälte Ruff, Wilhelm, Beier, Dauster & Partner

(57) **Zusammenfassung**

Eine Vorrichtung zur Ermittlung von Fluoreszenzeigenschaften von Proben hat eine polychromatischen Lichtquelle (LQ), einen optischen Anregungspfad (AP) zur Übertragung von spektralen Anteilen von Licht der Lichtquelle als Anregungslicht in eine Messposition (MP), in der eine Probe (P) angeordnet oder anordenbar ist, und einen optischen Emissionspfad (EP) zur Übertragung von durch die Probe emittiertem Emissionslicht zu einem Detektor (DET). Im Anregungspfad ist mindestens ein dispersiver Monochromator angeordnet. Der Anregungspfad ist frei von Interferenz-Bandpassfiltern. Im Emissionspfad ist eine stufenlos einstellbare Transmissionsfilteranordnung (TFA) mit mindestens einem spektral durchstimmbaren Transmissionsfilter (TF1, TF2, TF3) angeordnet.

## Beschreibung

Die Erfindung betrifft eine Vorrichtung zur Ermittlung von Fluoreszenzeigenschaften von Proben gemäß dem Oberbegriff von Anspruch 1.

Verfahren der Fluoreszenzspektroskopie gehören zu den wichtigsten Untersuchungsmethoden in der biochemischen und pharmakologischen Forschung. Zur Messwerterfassung werden Vorrichtungen zur Ermittlung von Fluoreszenzeigenschaften von Proben eingesetzt. Diese können als reine Fluorometer ausschließlich für Fluoreszenzmessungen ausgelegt sein oder in Multi-Technologie-Geräte, z.B. sogenannten Multi-Label-Reader (MLR), integriert sein, die neben Fluoreszenzmessungen auch andere Messmethoden ermöglichen, z.B. Lumineszenzmessungen, Absorptionsmessungen etc.

Bei der Messung der Fluoreszenz wird über einen optischen Anregungspfad die Probe mit Licht einer bestimmten Anregungswellenlänge beaufschlagt und dadurch Fluoreszenzlicht erzeugt. Das aus der Probe emittierte Fluoreszenzlicht (Emissionslicht), welches gegenüber dem Anregungslicht normalerweise zu längeren Wellenlängen (niedrigeren Energien) verschoben ist, wird in einem optischen Emissionspfad einem Detektor zugeleitet und die resultierenden Intensitäten gemessen.

Empfindliche Fluoreszenzbestimmungen erfordern eine starke Blockung des Anregungslichtes gegenüber dem schwachen Emissionslicht aus der Probe. Wenn das Anregungslicht aus einer breitbandigen bzw. polychromatischen Lichtquelle erzeugt wird, sollten alle Wellenlängen, die nicht der Anregung dienen, unterdrückt werden.

Die Leistungs- und Spezifikationsanforderungen an Multilabel Reader (MLR) sind vielfältig und herausfordernd an die Gerätetechnologien. Insbesondere die Messmethoden Absorption, Fluoreszenzintensität, Fluoreszenzpolarisation (FP bzw. Fluoreszenzanisotropie) sowie zeitaufgelöste Fluoreszenzverfahren (TRF, HTRF) stellen hohe Anforderungen an den zur Verfügung stehenden Spektralbereich und die erreichbare Empfindlichkeit.

Einfachere Geräte arbeiten mit dedizierten Interferenzbandpassfiltern sowohl in der Excitation (d.h. im Anregungspfad) als auch in der Emission (d.h. im Emissionspfad). Hiermit können gute bis sehr gute Empfindlichkeiten aufgrund der hohen Transmissivität der Filter im Passbereich bei gleichzeitig guter (optische Dichte (OD) typischerweise OD6) Blockung außerhalb dieses Bereichs erreicht werden. Nachteilig an dieser Lösung ist jedoch die Einschränkung auf die Spektralbereiche der zur Verfügung stehenden Filter. Hierdurch können Anwender nicht flexibel genug neue Probensysteme testen und müssen eine große Anzahl teurer Filter anschaffen, die gegebenenfalls später nicht benötigt werden.

Unter anderem aus diesem Grund haben sich in den letzten Jahren Multi-Label-Reader mit dispersiven Monochromatoren durchgesetzt. Der Begriff "dispersiver Monochromator" bezeichnet einen bestimmten Typ eines optischen Systems zur spektralen Isolierung einer bestimmten Wellenlänge bzw. eines engen Wellenlängenbereichs aus einer einfallenden Lichtintensität mit größerer spektraler Bandbreite. In einem dispersiven Monochromator wird einfallendes Licht mittels eines dispersiven Elements stufenlos aufgefächert bzw. in seine spektralen Anteile zerlegt. Mittels einer Spaltblende wird aus diesem Spektrum ein engerer Spektralbereich um die gewünschte Wellenlänge selektiert, wobei die Spaltbreite dieses Spalts die Bandbreite des ausgewählten Lichts mitbestimmt. Ein dispersiver Monochromator erlaubt dadurch innerhalb technisch bedingter Grenzen eine stufenlose (kontinuierliche) Einstellung der zu selektierenden Wellenlänge bzw. des zu selektierenden Wellenlängenbereichs. Als dispersives Element kann z.B. ein Prisma (wirkt über die Dispersion des Prismenmaterials) oder ein Beugungsgitter (wirkt über Beugung) verwendet werden.

Filterelemente wie Interferenz-Bandpassfilter, die prinzipiell ebenfalls zur spektralen Isolierung einer bestimmten Wellenlänge bzw. eines engen Wellenlängenbereichs aus einer einfallenden Lichtintensität mit größerer spektraler Bandbreite dienen können, werden in dieser Anmeldung nicht als Monochromator, sondern als "Filter" bezeichnet.

Die WO 2012/095312 A1 zeigt eine Vorrichtung zur Messung von optischen Eigenschaften von Proben in Mikroplatten, die auch zur Fluoreszenzmessung genutzt werden kann und im Anregungspfad sowie im Emissionspfad einen dispersiven Monochromator aufweist.

Mit derartigen Geräten ist es möglich, innerhalb gewisser Grenzen beliebige Zentralwellenlängen zu wählen. Die spektrale Breite hängt hierbei von der Spaltbereite der dispersiven Monochromatoren ab. Der Gewinn an Flexibilität wird erkauft durch eine verringerte Sensitivität, da die dispersiven Monochromatoren, die häufig als Doppelmonochromator, also mit zwei dispersiven Elementen, ausgeführt sind, bei ausreichender Blockung im Vergleich zu Bandpassfiltern eine geringere Transmissivität aufweisen.

Diesem Problem kann durch die Verwendung spektral durchstimmbarer Interferenzfilter begegnet werden, die die hohe Transmission und gute Blockung von Interferenzfiltern mit der Flexibilität von Monochromatoren verbinden.

Die Firma BMG Labtech GmbH, Ortenberg, bietet unter der Marke CLARIOstar® einen Microplate Reader an, der sowohl im Anregungsstrahlengang, also zwischen Lichtquelle und Probe, als auch im Emissionsstrahlengang, also zwischen Probe und Detektor, linear variable Filter (LVF) verwendet. Die Strahlengänge sind über einen verschiebbaren dichroitischen Spiegel verknüpft, der als Strahlteiler fungiert.

Aus der WO 2010/043855 A1 ist ein Fluoreszenzspektrometer bekannt, welches im Anregungsstrahlengang zwischen Lichtquelle und Probe einen dispersiven Monochromator aufweist, während im Emissionsstrahlengang zwischen der Probe und dem Detektor eine Kombination aus einem dispersiven Monochromator und einem diesem nachgeschalteten variablen Interferenzfilter angeordnet ist. Im Vergleich zu einem Doppelmonochromator soll sich dadurch eine bessere Blockung bei gleichzeitig verbesserter Empfindlichkeit ergeben.

Das europäische Patent EP 0 981 043 B1 beschreibt unter anderem ein scannendes Fluorometersystem. Im Anregungsstrahlengang zwischen einer Xenon-Lichtquelle und der Probe gibt es einen dispersiven Monochromator. Auch im Emissionsstrahlengang ist ein dispersiven Monochromator vorgesehen. Sowohl im Anregungsstrahlengang als auch im Emissionsstrahlengang gibt es jeweils ein Filterrad mit mehreren Bandpassfiltern, die wahlweise in den jeweiligen Strahlengang gestellt werden können. Die unteren und oberen Abschneidewellenlängen der Bandpassfilter variieren schrittweise, bestimmte Bandbreiten können dadurch vorgegeben werden. Die Bandpassfilter können zur Verbesserung der Blockung und/oder zur Streulichtunterdrückung beitragen.

### AUFGABE UND LÖSUNG

Es ist eine Aufgabe der Erfindung, eine gattungsgemäße Vorrichtung zur Ermittlung von Fluoreszenzeigenschaften von Proben bereitzustellen, die hohe Flexibilität bei der Wahl von Wellenlängenbereichen mit hoher Empfindlichkeit und großem Spektralbereich kombiniert.

Zur Lösung dieser und anderer Aufgaben stellt die Erfindung eine Vorrichtung zur Ermittlung von Fluoreszenzeigenschaften von Proben mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Der Erfindung liegt unter anderem die Erkenntnis zugrunde, dass bei Fluoreszenzmessungen aufgrund der Rotverschiebung des Emissionslichts gegenüber dem Anregungslicht für den Anregungspfad und den Emissionspfad unterschiedliche Anforderungen bezüglich der unteren Grenze der durchgelassenen Wellenlängen existieren.

Um hohe Flexibilität bezüglich der durchführbaren Messtechniken zu erreichen, sollte der Anregungspfad so ausgelegt sein, dass auch Wellenlängen unterhalb 300 nm bis 320 nm durchgelassen werden, beispielsweise bis hinunter zu 200 bis 220 nm. Wellenlängen von weniger als 300 nm werden z.B. für Absorptionsmessungen zur Bestimmung von Protein und DNA Konzentrationen benötigt. Weiterhin existieren einige Fluorophore, die um 280 nm anregbar sind. Daraus ergibt sich, dass Wellenlängen <300 nm im Excitationsstrahlengang (Anregungsstrahlengang) zur Verfügung stehen sollten. Durch Verwendung mindestens eines dispersiven Monochromators und die Vermeidung von Interferenz-Bandpassfiltern zur beidseitigen Begrenzung der spektralen Bandbreite im Anregungsstrahlengang können diese kurzen Wellenlängen zur Verfügung gestellt werden.

Durch die Vermeidung von Interferenz-Bandpassfiltern werden im Anregungsstrahlengang auch kurze Wellenlängen von weniger als ca. 300 nm bis 320 nm unter Beibehaltung der durch den dispersiven Monochromator gegebenen Flexibilität hinsichtlich Zentralwellenlänge und Spektralbereich verfügbar. Andere Filter, wie z.B. Ordnungsfilter zur Unterdrückung von Streulicht durch höhere Beugungsordnungen des Diffraktionsgitters, also Langpassfilter, können dagegen im Anregungsstrahlengang vorhanden sein.

Da die Fluoreszenzemission bathochrom, also zu höheren Wellenlängen, verschoben ist, genügen dagegen in der Emission Spektralbereiche mit größeren Wellenlängen von ca. 300nm oder mehr. Hier können variable Kantenfilter, deren untere Grenzwellenlänge häufig bei 320nm liegt, gegebenenfalls durch ein zusätzliches 310/20 Bandpassfilter ergänzt werden, so dass der Bereich zwischen 300nm und 320nm zur Verfügung steht. Im Emissionspfad ist daher eine stufenlos einstellbare Transmissionsfilteranordnung, z.B. mit einem oder mehreren spektral durchstimmbarer Interferenzfilter(n), angeordnet, die hohe Transmissivität und gute Blockung bietet. Die Kombination von einem oder mehreren dispersiven Monochromatoren in der Excitation (Anregung) und einem oder mehreren variablen Filtern in der Emission bietet dem Anwender daher höchste Flexibilität bei maximaler Empfindlichkeit und großem Spektralbereich. Dadurch wird der gesamte, für hohe Anwendungsflexibilität wünschenswerte Spektralbereich abgedeckt. Gleichzeitig können durch die hohe Transmissivität der variablen Filter und den breiten und flexibel zugänglichen spektralen Passbereichen im Emissionspfad empfindliche Messungen wie z.B. zeitaufgelöste Fluoreszenzmessungen (time-resolved fluorescence, TRF), homogene zeitaufgelöste Fluoreszenzmessungen (HTRF) und Fluoreszenzpolarisationsmessungen (FP) ohne die Verwendung von Interferenz-Bandpassfiltern mit fixen Transmissionsfenstern sowohl in der Anregung als auch in der Emission durchgeführt werden. Die Eigenschaften wirken sich weiterhin positiv auf die Messung von Biolumineszenz Resonanz Energie Transfer (BRET) und Fluoreszenz Resonanzenergie Transfer (FRET) aus.

Die Vorrichtung ist nicht nur zur Ermittlung von Fluoreszenzeigenschaften geeignet. Es können z.B. auch Phosporeszenzeigenschaften ermittelt werden, so dass die Vorrichtung auch als Vorrichtung zur Ermittlung von Fluoreszenzeigenschaften und/oder Phosphoreszenz-Eigenschaften bezeichnet werden kann.

In manchen Fällen kann ein einziger dispersiven Monochromator im Anregungspfad ausreichen. Vorzugsweise ist in dem Anregungspfad zusätzlich zu einem ersten dispersiven Monochromator ein zweiter dispersiver Monochromator angeordnet, so dass im Anregungspfad ein (dispersiver) Doppelmonochromator als wellenlängenselektierende Einrichtung wirkt. Durch einen solchen Doppelmonochromator kann eine verbesserte Unterdrückung von Streulicht erreicht werden. Alternativ ist es auch möglich, im Anregungspfad nur einen einzigen dispersiven Monochromator (Einfachmonochromator) zu nutzen und zusätzlich einen variablen Kurzpassfilter vorzusehen. Hierdurch ergibt sich im Vergleich zum Doppelmonochromator eine verbesserte Transmissivität, das Kurzpassfilter blockt Streulicht.

Im Emissionspfad können unterschiedliche Maßnahmen allein oder in Kombination vorgesehen sein, die dazu beitragen, die Analyse des von der Probe emittierten Emissionslichts zu verbessern. Bei manchen Ausführungsformen ist im Emissionspfad zwischen der Messposition und einem Transmissionsfilter der Transmissionsfilteranordnung ein optisches Abbildungssystem angeordnet, welches eine in der Messposition angeordnete Probe auf eine Filterfläche des Transmissionsfilters abbildet. Hierdurch kann sich eine verbesserte Flankensteilheit der Transmissionskurve des Transmissionsfilters im Bereich der gewünschten Grenzwellenlänge ergeben, da die Flankenstelheit bei Interferenz-Transmissionsfiltern vom Lichteinfallswinkel und von der beleuchteten Fläche abhängt und diese durch eine Zwischenabbildung verkleinert werden können. Das optische Abbildungssystem kann ohne oder mit Zwischenbild arbeiten.

Der Begriff "optisches Abbildungssystem" bezeichnet in dieser Anmeldung allgemein ein optisches System mit einem optischen Element (Linse oder gekrümmter Spiegel) oder mehreren optischen Elementen, deren Brechkraft bzw. Brechkräfte oder optische Wirkungen so gewählt sind, dass sich eine Endlich-Endlich-Abbildung zwischen einer vorderen Brennebene und der dazu optisch konjugierten hinterer Brennebene ergibt.

Es kann günstig sein, wenn im Emissionspfad vor der stufenlos einstellbaren Transmissionsfilteranordnung und/oder hinter dieser Transmissionsfilteranordnung und/oder zwischen Transmissionsfiltern der Transmissionsfilteranordnung mindestens eine Blende zur Unterdrückung von durch die Probe verursachten Streulicht und Rückreflektionen angeordnet ist. Die ausgeblendeten Strahlungsanteile können die Analyse des Emissionsspektrums nicht mehr stören.

Besonders vorteilhaft sind Ausführungsformen, die einen Strahlteiler aufweisen, welcher im Anregungspfad zwischen dem Austrittsspalt eines im Anregungspfad angeordneten Monochromators (z.B. eines Doppelmonochromators) und der Messposition und im Emissionspfad zwischen der Messposition und dem Detektor angeordnet ist. Hierdurch ist es möglich, die Einstrahlung von Anregungslicht in die Probe und die Erfassung von Emissionslicht aus der Probe von der gleichen Seite der Messposition bzw. der Probe vorzunehmen. Eine Integration der Vorrichtung in einen Multi-Label-Reader wird hierdurch begünstigt.

Vorzugsweise ist der Strahlteiler ein variabler dichroitischer Strahlteiler, beispielsweise in Form eines verschiebbaren dichroitischen Spiegels. Es können auch dichroitische Spiegel mit festen Flankenwellenlängen verwendet werden. Dann ist es in der Regel vorteilhaft, wenn mehrere dichroitische Spiegel mit unterschiedlichen Flankenwellenlängen vorgehalten werden und im Bedarfsfall so in den Strahlengang eingefahren werden, dass ihre Trennwellenlänge bzw. Flankenwellenlänge zwischen dem Passband des Anregungsstrahlengangs (Exzitationspassband) und dem Passband des Emissionspfads (Emissionspassband) liegt, so dass die Strahlengänge spektral voneinander separiert werden können. Als Alternativen können beispielsweise auch Lochspiegel oder teilverspiegelte Flächen, wie beispielsweise Glasplatten mit Zentralverspiegelung oder Spiegelarme, zur geometrischen Strahlteilung verwendet werden.

Besonders günstig sind häufig Ausführungsformen, bei denen zwischen der Messposition und dem Strahlteiler ein optisches Abbildungssystem angeordnet ist, welches eine in der Messposition angeordnete Probe auf eine Strahlteilerfläche des variablen Strahlteilers abbildet. Hierdurch kann eine besonders trennscharfe spektrale Trennung erreicht werden. Ein zwischen Strahlteiler und Messposition angeordnetes Abbildungssystem wirkt auch im Anregungsstrahlengang im Sinne einer verbesserten Ausleuchtung einer in der Messposition angeordneten Probe.

Zur Unterdrückung von Streulicht und Rückreflektionen kann vor und/oder hinter einer Strahlteilerfläche des Strahlteilers eine Blende angeordnet sein.

Eine besonders hohe Variabilität bei der Auswahl des für die Analyse vorgesehenen Wellenlängenbands des Emissionsspektrums wird bei manchen Ausführungsformen dadurch erreicht, dass die Transmissionsfilteranordnung ein erstes Kantenfilter und mindestens ein davon gesondertes zweites Kantenfilter aufweist, wobei das erste und das zweite Kantenfilter im Emissionspfad hintereinandergeschaltet und unabhängig voneinander verstellbar sind. Das erste und das zweite Kantenfilter können unmittelbar (d.h. ohne Zwischenschaltung weiterer optischer Elemente) hintereinander angeordnet sein. Es ist auch möglich, dass zwischen dem ersten Kantenfilter und dem zweiten Kantenfilter mindestens ein optisches Element angeordnet ist. Vorzugsweise ist zwischen dem ersten und dem zweiten Kantenfilter ein optisches Abbildungssystem angeordnet, welches eine Filterfläche des ersten Kantenfilters auf eine Filterfläche des zweiten Kantenfilters abbildet. Auf diese Weise kann bei beiden Kantenfiltern eine gewünschte Trennwellenlänge zwischen transmittiertem und geblocktem Teil des Spektrums besonders präzise eingestellt werden.

Die Filterung der von der Messposition zum Detektor gelangenden Emissionsstrahlung kann ausschließlich mithilfe von geeigneten Transmissionsfiltern erfolgen. Es ist jedoch auch möglich, dass im Emissionspfad zusätzlich zu der Transmissionsfilteranordnung ein dispersiver Monochromator angeordnet ist. Vorzugsweise handelt es sich dabei um einen Einzel-Monochromator, so dass die durch den dispersiven Monochromator verursachten Transmissionsverluste gering gehalten werden können. Der dispersive Monochromator ist vorzugsweise zwischen der Transmissionsfilteranordnung und dem Detektor angeordnet, also der Transmissionsfilteranordnung nachgeschaltet. Diese Abfolge von Transmissionsfilteranordnung mit nachgeschaltetem dispersiven Monochromator ist unter anderem deshalb vorteilhaft, weil zuvor bereits durch die Transmissionsfilteranordnung weggefiltertes Licht nicht mehr durch den dispersiven Monochromator vagabundieren und dadurch dessen Blockungswirkung verschlechtern kann.

Andere Varianten kombinieren im Emissionspfad in dieser Reihenfolge einen variablen Dichroit als Strahlteiler, ein variables Langpass-Filter sowie einen diesem nachgeschalteten (dispersiven) Einfach-Monochromator. Solche Varianten können in der Regel kostengünstiger sein als eine Kombination eines variablen Dichroits, zweier hintereinandergeschalteter variabler Langpassfilter und eines variablen Kurzpassfilters, die selbstverständlich ebenfalls möglich sind. Es kann somit im Emissionspfad zwischen verschiedenen Anordnungen und Kombinationen von wellenlängenselektiven Elementen je nach Anforderungen an die zu erzielende Empfindlichkeit gewählt werden.

Die Erfindung betrifft auch ein Messgerät, das eine erfindungsgemäße Vorrichtung enthält. Es kann sich dabei zum Beispiel um ein dediziertes Fluorometer handeln, welches ausschließlich für Fluoreszenzmessungen ausgestattet ist, oder um ein Mehrzweckgerät, insbesondere einen Multi-Label-Reader.

Die vorstehenden und weitere Merkmale gehen außer aus den Ansprüchen auch aus der Beschreibung und den Zeichnungen hervor. Dabei können die einzelnen Merkmale jeweils für sich alleine oder zu mehreren in Form von Unterkombinationen bei einer Ausführungsform der Erfindung und auf anderen Gebieten verwirklicht sein und vorteilhafte Ausführungsformen darstellen. Bevorzugte Ausführungsformen werden an Hand der beigefügten Zeichnungen erläutert.

### KURZBESCHREIBUNG DER ZEICHNUNGEN

- Fig. 1: zeigt schematisch ein erstes Ausführungsbeispiel einer Vorrichtung zur Ermittlung von Fluoreszenzeigenschaften von Proben mit einem Doppelmonochromator im Anregungspfad und einer variablen Transmissionsfilteranordnung im Emissionspfad;
- Fig. 2: zeigt schematisch ein zweites Ausführungsbeispiel einer Vorrichtung zur Ermittlung von Fluoreszenzeigenschaften von Proben;
- Fig. 3: zeigt schematisch ein drittes Ausführungsbeispiel einer Vorrichtung zur Ermittlung von Fluoreszenzeigenschaften von Proben; und
- Fig. 4: zeigt schematisch ein viertes Ausführungsbeispiel einer Vorrichtung zur Ermittlung von Fluoreszenzeigenschaften von Proben.

### DETAILLIERTE BESCHREIBUNG BEVORZUGTER AUSFÜHRUNGSFORMEN

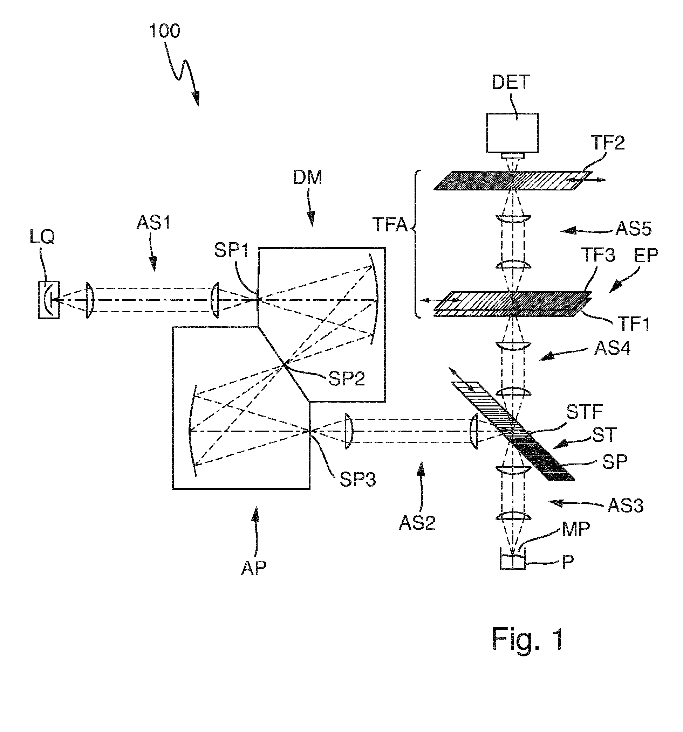

In Fig. 1 ist schematisch ein erstes Ausführungsbeispiel einer erfindungsgemäßen Vorrichtung 100 zur Ermittlung von Fluoreszenzeigenschaften von Proben gezeigt. Sie ist Bestandteil eines nicht näher dargestellten Messgeräts, bei dem es sich z.B. um ein Fluorometer, einen Dual-Label-Reader oder einen Multi-Label-Reader handeln kann.

In der Beschreibung werden relative Positionen optischer Elemente mit Präpositionen wie "zwischen", "vor", "hinter" oder dergleichen beschrieben. Diese Präpositionen beziehen sich auf Positionen entlang des optischen Pfades von der Lichtquelle über die Messposition bis zum Detektor. Bezeichnungen wie "erster", "zweiter" "dritter" etc. dienen ausschließlich der eindeutigen Identifizierung der entsprechenden Elemente und beschreiben im Allgemeinen nicht die Reihenfolge, in der Elemente im optischen Pfad angeordnet sind.

Ein dispersiver Monochromator wird nachfolgend auch vereinfachend lediglich als "Monochromator" bezeichnet, so dass die Bergriffe "dispersiver Monochromator" und "Monochromator" synonym zu verstehen sind.

Die Vorrichtung 100 hat eine primäre Lichtquelle LQ in Form eine Xenon-Lampe mit einem kurzen Elektrodenabstand. Es kann sich je nach Anwendung um eine Blitzlampe oder eine Dauerstrich-Lampe handeln. Alternativ kann z.B. auch eine Glühlampe als Lichtquelle verwendet werde. Die Lichtquelle hat ein breites Emissionsspektrum im sichtbaren Spektralbereich ("Weißlicht").

Ein optischer Anregungspfad AP führt von der Lichtquelle LQ bis zu einer Messposition MP, in der sich bei der Nutzung der Vorrichtung eine Probe P befindet. Die Probe befindet sich in einer Vertiefung bzw. einem Topf einer mit vielen Töpfen ausgestatteten Mikroplatte.

Die optischen Elemente des optischen Anregungspfades dienen der Übertragung von spektralen Anteilen von Licht der primären Lichtquelle als Anregungslicht in die Messposition. In der Probe befindet sich eine Substanz, die durch das Anregungslicht dazu angeregt werden kann, Fluoreszenzlicht zu emittieren. Das Fluoreszenzlicht ist gegenüber dem Anregungslicht zu niedrigeren Energien bzw. größeren Wellenlängen verschoben. Das Ausmaß der spektralen Rotverschiebung ist für die Substanz spezifisch und wird als Stokes-Verschiebung bzw. Stokes-Shift bezeichnet.

Das Emissionslicht gelangt über einen optischen Emissionspfad EP von der Probe zu einem Detektor DET, der in Abhängigkeit vom auftreffenden Licht elektrische Signale erzeugt, die einer nicht gezeigten Auswerteeinheit zugeführt werden, um das Emissionslicht zur Charakterisierung der Probe spektral auszuwerten.

Bei der Vorrichtung aus Fig. 1 erfolgt die Anregung mit Hilfe eines dispersiven Doppelmonochromators DM, der insgesamt drei Spalte enthält, nämlich einen Eintrittsspalt (erster Spalt SP1), einen Mittenspalt (zweiter Spalt SP2), sowie einen Austrittsspalt (dritter Spalt SP3). Der Mittenspalt ist gleichzeitig Austrittsspalt des vorgeschalteten ersten dispersiven Monochromators und Eintrittsspalt des nachgeschalteten zweiten dispersiven Monochromators. Jeder der Spalte wird durch eine entsprechende Spaltblende (erste, zweite bzw. dritte Spaltblende) in einer zugehörigen Spaltebene definiert. Die Spaltbreite ist jeweils stufenlos verstellbar. Bei anderen Ausführungsformen können z.B. aus Kostengründen auch feste Spalte bzw. Spaltbreiten am Eintritt und/oder am Austritt vorgesehen sein.

Der Lichtbogen der Lichtquelle wird mittels eines ersten Abbildungssystems AS1 auf den Eintrittsspalt SP1 abgebildet. Innerhalb des Doppelmonochromators wird der Eintrittsspalt SP1 auf den Mittenspalt SP2 und dieser wiederum auf dem Austrittsspalt SP3 abgebildet. Die spektrale Bandbreite des Doppelmonochromators kann über die Breite des Mittenspalts SP2 verändert werden. Der Austrittsspalt SP3 wird mit Hilfe eines zweiten Abbildungssystems AS2 in eine Zwischenbildebene ZB abgebildet, in der sich die wellenlängenabhängig reflektierende Strahlteilerfläche eines dichroitischen Spiegels SP befindet, der als physikalischer Strahlteiler ST dient. Die ebene Strahlteilerfläche (Spiegelfläche) ist um 45° gegenüber der optischen Achse des zweiten Abbildungssystems AS2 geneigt. Andere Neigungswinkel können z.B. aus Bauraumgründen günstig sein. Die Spiegelfläche ist mit einem optischen Interferenzschichtsystem beschichtet, das für Wellenlängen aus dem Wellenlängenband des Anregungslichts einen hohen Reflexionsgrad besitzt, so dass das Anregungslicht weitestgehend verlustfrei in Richtung Messposition MP reflektiert wird. Der Spiegel SP ist parallel zur Spiegelfläche stufenlos linear verschiebbar (Doppelpfeil), um die spektrale Lage der Filterkante zu verstellen. Somit ist ein variabler Strahlteiler vorgesehen.

Zwischen der Strahlteilerfläche und der Messposition befindet sich im Anregungspfad ein drittes optisches Abbildungssystem AS3, welches das Zwischenbild des Austrittsspalts SP3 in die Messposition bzw. die darin befindliche Probe abbildet. Die optische Achse des dritten Abbildungssystems ist gegenüber der optischen Achse des zweiten Abbildungssystems um 90° geneigt. Auch andere Neigungswinkel sind möglich.

Im Anregungspfad AP können Doppelmonochromatoren mit unterschiedlichen Bauformen verwendet werden, wobei je nach Anwendung Prismen und/oder Beugungsgitter als dispersive Elemente genutzt werden können. Beim dargestellten Ausführungsbeispiel hat der Doppelmonochromator zwei Konkavgitter als dispersive Elemente. Eines der Konkavgitter ist in Lichtlaufrichtung zwischen dem Eintrittsspalt SP1 und dem Mittenspalt (zweiter Spalt SP2) angeordnet, während das andere Konkavgitter in Laufrichtung des Anregungslichtes zwischen dem Mittenspalt SP2 und dem Austrittsspalt SP3 angeordnet ist.

Das von der Probe P emittierte Emissionslicht der Fluoreszenz ist gegenüber dem Anregungslicht spektral rotverschoben und strahlt prinzipiell in den gesamten Raumwinkelbereich oberhalb der Probe. Von diesem Raumwinkelbereich wird nur derjenige Teil genutzt, der vom dritten Abbildungssystem AP3 erfasst und in Richtung auf die Strahlteilerfläche STF abgebildet wird. Die Raumwinkel der Anregung und der Emission sind somit gleich groß.

Die Filterkante des dichroitischen Spiegels (d.h. der spektral schmale Übergangsbereich zwischen hoher Transmission und hohem Reflexionsgrad) liegt bei der gezeigten Verschiebungsstellung des dichroitischen Spiegels spektral zwischen dem Wellenlängenband des Anregungslichts und demjenigen des (längerwelligen) Emissionslichts. Somit hat der Strahlteiler für das Emissionslicht relativ hohe Transmissivität (z.B. Reflexionsgrad nahe bei 0), so dass das Emissionslicht in Richtung Detektor DET weitgehend verlustfrei durchgelassen wird.

Im Emissionspfad EP ist zwischen dem Strahlteiler ST und dem Detektor DET eine stufenlos einstellbare Transmissionsfilteranordnung TFA angeordnet, die im Beispielsfall drei spektral durchstimmbare Transmissionsfilter TF1, TF2 und TF3 in Form von Kantenfiltern aufweist. Das erste Transmissionsfilter bzw. Kantenfilter TF1 und das zweite Transmissionsfilter bzw. Kantenfilter TF2 sind unmittelbar hintereinander im Bereich der Bildebene eines vierten optischen Abbildungssystems AS4 angeordnet, welches den beleuchteten Bereich der Strahlteilerfläche auf die Filterfläche des vorgeschalteten ersten Transmissionsfilters TF1 oder in deren Nähe abbildet. Zwischen der Kombination aus erstem und zweiten Transmissionsfilter TF1, TF2 und dem dritten Transmissionsfilter bzw. Kantenfilter TF3 ist ein fünftes Abbildungssystem AS5 angeordnet, welches den beleuchteten Bereich der beiden Transmissionsfilter TF1, TF2 auf die Filterfläche des dritten Transmissionsfilters TF3 abbildet. Das Emissionslicht tritt nach Durchtritt durch alle drei Transmissionsfilter TF1, TF2 und TF3 in den Detektor DET ein.

Bei dieser Anordnung ist im Emissionspfad EP zwischen der Messposition MP und einem Transmissionsfilter TF1 der Transmissionsfilteranordnung TFA ein optisches Abbildungssystem angeordnet, welches eine in der Messposition angeordnete Probe auf eine Filterfläche des ersten Transmissionsfilters abbildet. Dieses optische Abbildungssystem arbeitet mit einem Zwischenbild im Bereich der Strahlteilerfläche und wird durch das dritte und vierte optische Abbildungssystem gebildet.

Jedes der drei variablen Transmissionsfilter TF1, TF2 und TF3 ist ein durchstimmbares Kantenfilter in Form eines Linear Variablen Filters (LVF). Jedes der Kantenfilter wird erzeugt durch Aufbringen keilförmiger, dielektrischer Wechselschichten. Daher kann durch laterales Verschieben der Filter in einer Verschiebungsrichtung (Doppelpfeil) senkrecht zur Durchstrahlungsrichtung für jedes Filter separat die Kantenwellenlänge verändert werden. Der Begriff "Kantenwellenlänge" bezeichnet hierbei jene Wellenlänge, bei der der Übergang zwischen hoher Transmission und hoher Blockung (niedriger Transmission) liegt. Durch das Hintereinanderschalten eines variablen Langpassfilters und eines variablen Kurzpassfilters wird ein variables Bandpassfilter geschaffen, dessen Kantenwellenlängen unabhängig voneinander kontinuierlich verstellt werden können. Werden die beiden Filter unabhängig voneinander lateral verschoben, lassen sich beliebige Passbereichsbreiten realisieren.

Im Beispielsfall ist das erste Transmissionsfilter TF1 ein Langpassfilter, das Wellenlängen kürzer als die Kantenwellenlänge im Wesentlichen blockiert und Wellenlängen länger als die Kantenwellenlänge überwiegend durchlässt.

Das zweite Transmissionsfilter TF2, das an optisch konjugierter Position zum ersten Transmissionsfilter TF1 angeordnet ist, ist ein Kurzpassfilter, welches Wellenlängen kürzer als seine Kantenwellenlänge durchlässt und Wellenlängen länger als seine Kantenwellenlänge weitestgehend blockiert. Eine umgekehrte Abfolge von Langpassfilter und Kurzpassfilter wäre auch möglich.

Es kann prinzipiell ausreichen, ein einziges variables Kurzpassfilter und ein einziges variables Langpassfilter zu kombinieren. Da jedoch die Blockung handelsüblicher variabler Kantenfilter in der Regel im Bereich von 3OD bis 4OD liegt, kann es sinnvoll sein, mindestens zwei Filter gleichen Typs hintereinanderzuschalten, um eine ausreichende Blockung zu erzielen. Hierbei reicht es aus, nur das Langpassfilter zu verdoppeln, da dieses für die Unterdrückung des eventuell noch vorhandenen Anregungslichts zuständig ist und nur für das Anregungslicht eine hohe Blockung von OD 6 oder mehr erreicht werden sollte. Dementsprechend ist im Beispielsfall das dritte Transmissionsfilter TF3 ein Langpassfilter. Dieses ist mit dem anderen Langpassfilter (erstes Transmissionsfilter TF1) gekoppelt und wir gemeinsam mit diesem bewegt.

Bei dieser Variante wird somit im Exzitationsstrahlengang (Anregungsstrahlengang) der Lichtbogen der Xe-Blitzlampe auf den Eintrittsspalt SP1 des Anregungs-Doppelmonochromators abgebildet. Das konjugierte Bild am Austrittsspalt SP3 wird über eine Zwischenabbildung mittels des zweiten Abbildungssystems und eine weitere Abbildung mithilfe des dritten Abbildungssystems AS3 in die Probe abgebildet. Das aus der Probe emittierte Emissionslicht wird durch das gleiche Abbildungssystem wieder eingesammelt, welches das Probenbild auf die beschichtete Fläche des linearen Filters abbildet. Eine zusätzliche, rechteckige Blende kann vorgesehen sein, um Streulicht und Rückreflektionen zu unterdrücken. Die Blende (Streulichtblende) sitzt vorzugsweise unmittelbar hinter dem dritten Transmissionsfilter TF3 derart, dass der Strahl des Emissionslichts ohne Beschneidung durch die Blendenöffnung hindurchgeht, der Blendenrand aber sehr nahe am Rand des Strahls liegt.

Der beispielhaft dargestellte Strahlengang bildet also konsequent ein rechteckiges Strahlprofil unter Verwendung gegebenenfalls unterschiedlicher Vergrößerungen ab und erreicht damit einen hohen Lichtdurchsatz bei gleichzeitig großer Flankensteilheit der variablen Filter. Die Flankensteilheit der Filter hängt hierbei wesentlich vom Lichteinfallswinkel und von der beleuchteten Fläche ab. Wird, wie im Beispielsfall, als Strahlteiler ein variabler Dichroit verwendet, so ist es vorteilhaft, auch hierauf sowohl den Lichtbogen der Lichtquelle als auch das Probenbild abzubilden, um eine große Flankensteilheit bzw. eine scharfe Trennung zwischen reflektiertem durchgelassenem Licht zu erreichen.

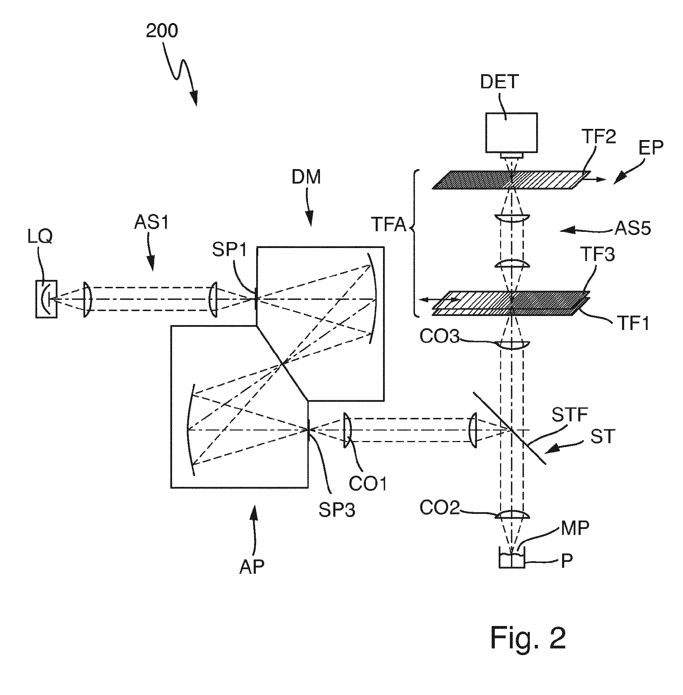

Im Rahmen der beanspruchten Erfindung sind zahlreiche Varianten möglich. In Fig. 2 ist schematisch ein zweites Ausführungsbeispiel einer erfindungsgemäßen Vorrichtung 200 zur Ermittlung von Fluoreszenzeigenschaften von Proben gezeigt, die anstelle der Variante aus Fig. 1 zum Beispiel in einem Fluorometer oder einem Multi-Label-Reader genutzt werden kann. Identische oder einander entsprechende Komponenten sind mit den gleichen Bezugszeichen wie in Fig. 1 bezeichnet.

Unterschiede zur Ausführungsform von Fig. 1 bestehen vor allem im Bereich des Strahlteilers ST und der strahlführenden und strahlformenden optischen Komponenten optisch vor und optisch hinter dem Strahlteiler. Bei dem Strahlteiler kann es sich wie beim Ausführungsbeispiel von Fig. 1 um einen lateral verschiebbaren dichroitischen Spiegel handeln. Es ist aber auch möglich, dass der Strahlteiler nach einem anderen Konzept arbeitet, zum Beispiel durch geometrische Strahlteilung. Hierzu kann eine teilverspiegelte Glasplatte oder ein kleiner Spiegel auf einem Halter, der in den Strahlengang ragt, oder ein Lochspiegel vorgesehen sein, der den Anregungsstrahlengang vom Emissionsstrahlengang geometrisch separiert.

Anstelle des zweiten Abbildungssystems AS2 aus Fig. 1 ist hier zwischen dem Austrittsspalt SP3 des Doppelmonochromators DM und der Strahlteilerfläche STF eine erste Kondensoroptik CO1 angeordnet, die das aus dem Austrittsspalt kommende divergente Strahlbündel weitestgehend kollimiert, so dass die Strahlteilerfläche im Bereich kollimierter Strahlung angeordnet ist. Der von der Strahlteilerfläche reflektierte Anteil des Anregungslichts wird durch einen zweiten Kondensor CO2 in der Probe bzw. der Messposition MP gesammelt.

Das von der Probe in einem größerem Raumwinkelbereich emittierte Licht wird im entsprechenden Raumwinkelbereich vom zweiten Kondensor CO2 gesammelt und in Richtung des Strahlteilers ST zurückgeführt, der das kollimierte, rot verschobene Emissionslicht in Richtung der nachgeschalteten variablen Transmissionsfilteranordnung TFA durchlässt. Um im Bereich der ersten Filterfläche der Transmissionsfilteranordnung einen möglichst kleinen ausgeleuchteten Bereich zu erreichen, ist zwischen dem Strahlteiler und der ersten Filterfläche eine dritte Kondensoroptik CO3 angeordnet.

Die zweite und die dritte Kondensoroptik CO2 und CO3 bilden gemeinsam ein optisches Abbildungssystem, das zwischen der Messposition MP und einem Transmissionsfilter TF1 der Transmissionsfilteranordnung TFA angeordnet ist und eine in der Messposition angeordnete Probe direkt (ohne Zwischenbild) auf eine Filterfläche des Transmissionsfilters abbildet. Der Strahlteiler ist innerhalb dieses optischen Abbildungssystems angeordnet.

Aufbau und Funktion der anderen Komponenten entsprechen denjenigen von Fig. 1, weshalb zur Vermeidung von Wiederholungen auf die dortige Beschreibung verwiesen wird.

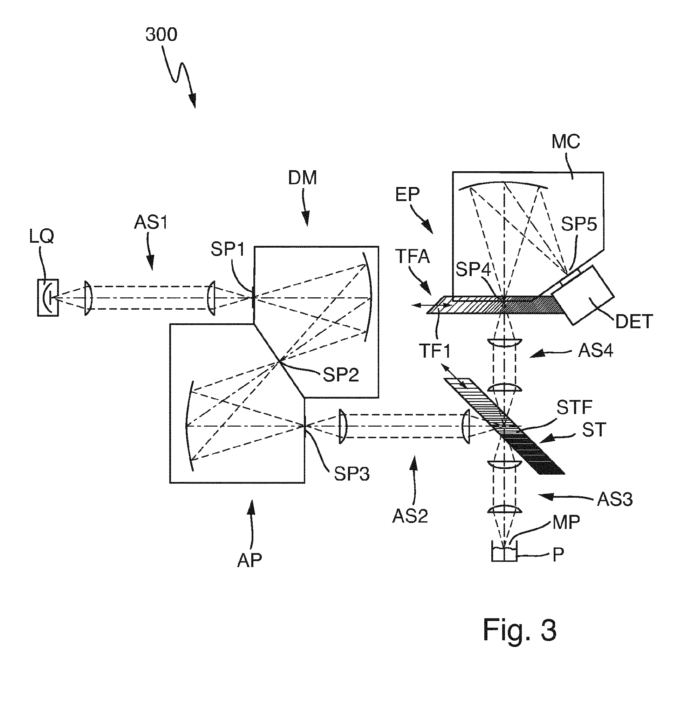

In Fig. 3 ist schematisch ein drittes Ausführungsbeispiel einer erfindungsgemäßen Vorrichtung 300 zur Ermittlung von Fluoreszenzeigenschaften von Proben gezeigt, die anstelle einer der anderen Varianten zum Beispiel im einem Fluorometer oder einem Multi-Label-Reader verwendet werden kann. Komponenten und Baugruppen mit gleicher oder ähnlicher Funktion wie in den anderen Ausführungsbeispielen werden mit den gleichen Bezugszeichen bezeichnet.

Die Ausführungsform von Fig. 3 unterscheidet sich von der Ausführungsform von Fig. 1 lediglich in demjenigen Teil des Emissionspfads EP, der zwischen der Strahlteilerfläche STF und dem Detektor DET liegt. Die variable Transmissionsfilteranordnung TFA hat in diesem Beispiel nur ein einziges spektral durchstimmbares Transmissionsfilter TF1, dessen Kantenwellenlänge durch laterale Verschiebung quer zur Durchstrahlungsrichtung stufenlos verstellt werden kann. Bei dem Transmissionsfilter TF1 handelt es sich um ein variables Langpassfilter. Zwischen diesem variablen Langpassfilter und dem Detektor ist ein Einfach-Monochromator MC angeordnet. Der Eintrittsspalt SP4 des Einfach-Monochromators befindet sich in oder in der Nähe der Bildebene des vierten Abbildungssystems AS4, welches das Zwischenbild des Austrittsspalts des Doppel-Monochromators auf das variable Transmissionsfilter TF1 abbildet. Innerhalb des Einzel-Monochromators bildet ein Konkavgitter den Eintrittsspalt auf den Austrittsspalt SP5 des Einzel-Monochromators ab, der unmittelbar vor dem Detektor DET sitzt. Diese Lösung kann ggf. mit geringeren Herstellungskosten realisiert werden.

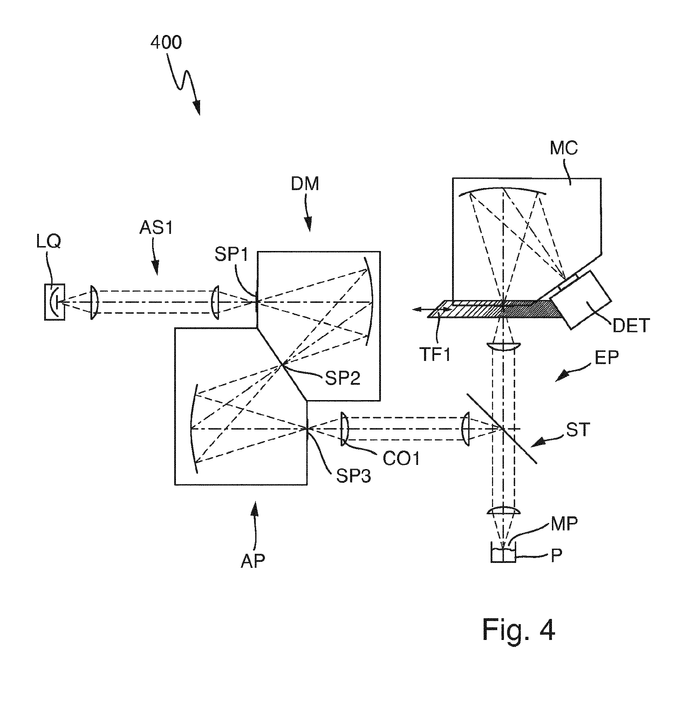

In Fig. 4 ist schematisch ein viertes Ausführungsbeispiel einer erfindungsgemäßen Vorrichtung 400 zur Ermittlung von Fluoreszenzeigenschaften von Proben gezeigt, welches anstelle einer der anderen Varianten zum Beispiel in einem Fluorometer oder einem Multi-Label-Reader eingesetzt werden kann. Die Vorrichtung 400 kann als Variante der Vorrichtung 200 aus Fig. 2 verstanden werden, bei der im Emissionsstrahlgang bzw. Emissionspfad EP zwischen dem Strahlteiler ST und dem Detektor DET anstelle der mit drei variablen Kantenfiltern arbeitenden Transmissionsfilteranordnung TFA ein variabler Langpassfilter TF1 in Kombination mit einem nachgeschalteten Einfach-Monochromator MC vorgesehen ist.

## Patentansprüche

1. Vorrichtung zur Ermittlung von Fluoreszenzeigenschaften von Proben mit:
einer polychromatischen Lichtquelle (LQ);
einem optischen Anregungspfad (AP) zur Übertragung von spektralen Anteilen von Licht der Lichtquelle als Anregungslicht in eine Messposition (MP), in der eine Probe (P) angeordnet oder anordenbar ist; und
einem optischen Emissionspfad (EP) zur Übertragung von durch die Probe emittiertem Emissionslicht zu einem Detektor (DET);
**dadurch gekennzeichnet, dass**
im Anregungspfad mindestens ein dispersiver Monochromator angeordnet ist;
der Anregungspfad frei von Interferenz-Bandpassfiltern ist, und
im Emissionspfad eine stufenlos einstellbare Transmissionsfilteranordnung (TFA) mit mindestens einem spektral durchstimmbaren Transmissionsfilter (TF1, TF2, TF3) angeordnet ist.

2. Vorrichtung nach Anspruch 1, **dadurch gekennzeichnet, dass** in dem Anregungspfad (AP) zusätzlich zu einem ersten dispersiven Monochromator ein zweiter dispersiver Monochromator angeordnet ist, so dass im Anregungspfad ein Doppelmonochromator (DM) angeordnet ist.

3. Vorrichtung nach Anspruch 1 oder 2, **dadurch gekennzeichnet, dass** im Emissionspfad (EP) zwischen der Messposition (MP) und einem Transmissionsfilter (TF1) der Transmissionsfilteranordnung (TFA) ein optisches Abbildungssystem (AS3, AS4; CO2, CO3) angeordnet ist, welches eine in der Messposition angeordnete Probe auf eine Filterfläche des Transmissionsfilters abbildet.

4. Vorrichtung nach Anspruch 1, 2 oder 3, **dadurch gekennzeichnet, dass** im Emissionspfad (EP) vor der stufenlos einstellbaren Transmissionsfilteranordnung (TFA) und/oder hinter der Transmissionsfilteranordnung und/oder zwischen Transmissionsfiltern der Transmissionsfilteranordnung mindestens eine Blende zur Unterdrückung von durch die Probe verursachten Streulicht und Rückreflektionen angeordnet ist.

5. Vorrichtung nach einem der vorhergehenden Ansprüche, **gekennzeichnet durch** einen Strahlteiler (ST), der im Anregungspfad (AP) zwischen einem Austrittsspalt (SP3) eines dispersiven Monochromators und der Messposition (MP) und im Emissionspfad (EP) zwischen der Messposition und dem Detektor (DET) angeordnet ist.

6. Vorrichtung nach Anspruch 5, **dadurch gekennzeichnet, dass** der Strahlteiler (ST) ein variabler dichroitischer Strahlteiler ist.

7. Vorrichtung nach Anspruch 5 oder 6, **dadurch gekennzeichnet, dass** zwischen der Messposition (MP) und dem Strahlteiler (ST) ein optisches Abbildungssystem (AS3) angeordnet ist, welches eine in der Messposition angeordnete Probe (P) auf eine Strahlteilerfläche (STF) des Strahlteilers (ST) abbildet.

8. Vorrichtung nach einem der vorhergehenden Ansprüche, **dadurch gekennzeichnet, dass** die Transmissionsfilteranordnung (TFA) ein erstes Kantenfilter (TF1) und mindestens ein davon gesondertes zweites Kantenfilter (TF2) aufweist, wobei das erste und das zweite Kantenfilter im Emissionspfad (EP) hintereinandergeschaltet und unabhängig voneinander verstellbar sind.

9. Vorrichtung nach Anspruch 8, **dadurch gekennzeichnet, dass** zwischen dem ersten Kantenfilter (TF1) und dem zweiten Kantenfilter (TF2) ein optisches Abbildungssystem (AS5) angeordnet ist.

10. Vorrichtung nach einem der vorhergehenden Ansprüche, **dadurch gekennzeichnet, dass** im Emissionspfad (EP) zusätzlich zu der Transmissionsfilteranordnung (TFA) ein dispersiver Monochromator (MC) angeordnet ist.

11. Vorrichtung nach Anspruch 10, **dadurch gekennzeichnet, dass** der dispersive Monochromator (MC) zwischen der Transmissionsfilteranordnung (TFA) und dem Detektor (DET) angeordnet ist.

12. Vorrichtung nach Anspruch 10 oder 11, **dadurch gekennzeichnet, dass** der dispersive Monochromator (MC) ein Einzelmonochromator ist.

13. Messgerät, **dadurch gekennzeichnet, dass** es eine Vorrichtung nach einem der vorhergehenden Ansprüche enthält.

14. Messgerät nach Anspruch 13, **dadurch gekennzeichnet, dass** das Messgerät ein Fluorometer oder ein Multi-Label-Reader ist.
